# EUROPEAN PATENT APPLICATION

(11) **EP 1 669 652 A1**
(43) Date of publication of application: **14.06.2006**
(21) Application number: 05257323.5
(22) Date of filing: 29.11.2005
(51) Int. Cl.: F16L 13/16, F16L 41/08, B23P 11/00, B21D 39/04

(54) **Pipe joint structures and methods of manufacturing such structures**

(30) Priority: 07.12.2004 JP 2004353911
(71) Applicant: Sanden Corporation, Isesaki-shi, Gunma 372-8502 (JP)
(72) Inventor: Chiba, Tomohiro, Isesaki-shi Gunma, 372-8502 (JP); Watanabe, Akimichi, Isesaki-shi Gunma, 372-8502 (JP)
(74) Representative: Haley, Stephen

(57) **Abstract**

A pipe joint structure and its associated assembly method, includes a pipe with a collar projecting radially, and a flange having a pipe insertion hole formed through an end of the pipe and a flange recessed portion provided at a circumferential portion of the pipe insertion hole and formed to receive the collar. An inner diameter of the flange recessed portion is greater than an outer diameter of the collar, and the collar is plastically deformed in a radial direction to bring the collar into surface contact with an inner surface of the flange recessed portion. The pipe and the flange may be connected to each other securely, and the cost for the manufacture may be significantly reduced.

## Description

The present invention relates to pipe joint structures and methods of manufacturing such structures, and more specifically, to pipe joint structures suitable for forming connections between an heat exchange medium introduction pipe or an heat exchange medium discharge pipe, or both, and a heat exchanger core used in a vehicle, and methods for manufacturing such structures.

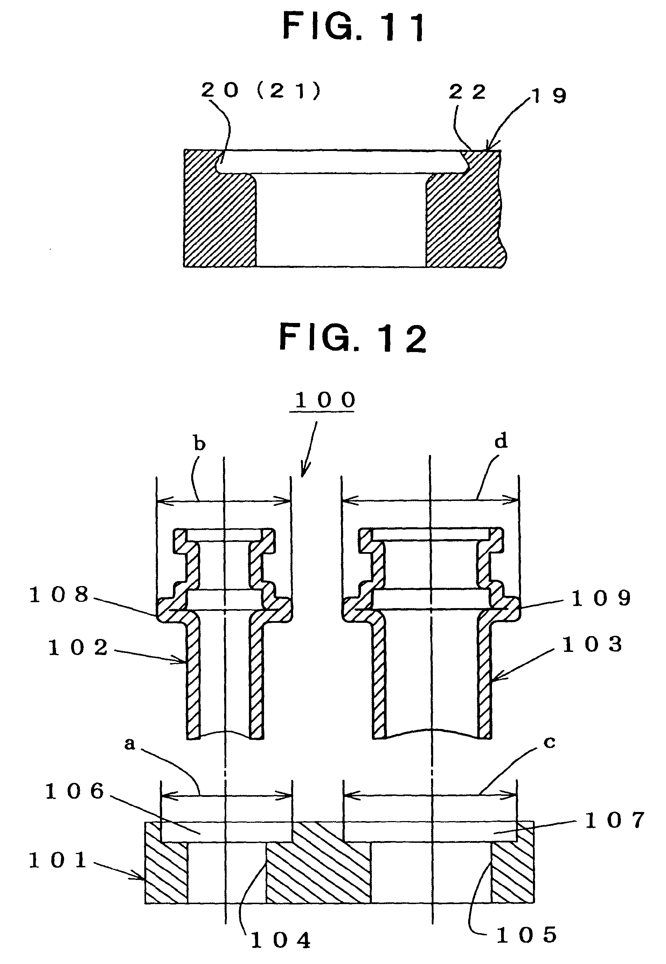

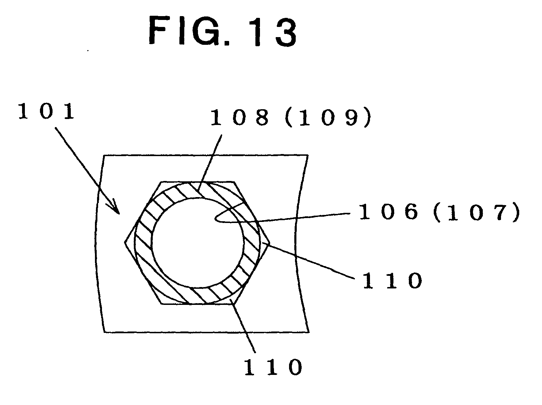

A known, pipe joint structure used for forming connections between an heat exchange medium introduction or an heat exchange medium discharge pipe, or both, and a heat exchanger core is depicted in Fig. 12. Such structures are described in Japanese Patent Application No. JP-A-2004-36944. In Fig. 12, a pipe joint 100 has a flange 101 and pipes 102 and 103. Through holes 104 and 105, into which pipes 102 and 103 are inserted, are formed through in flange 101. Flange recessed portions 106 and 107 are formed at circumferential portions of through holes 104 and 105 at positions on the pipe insertion side of flange 101. Flange recessed portions 106 and 107 are formed with a polygonal shape, as depicted in Fig. 13, or a serrated shape. On the other hand, collars 108 and 109, each projecting in a radial direction of its pipe, are provided at the ends of pipes 102 and 103.

In such a pipe joint structure, an outer diameter b of collar 108 of pipe 102 is slightly greater than an inner diameter a of flange recessed portion 106, and an outer diameter d of collar 109 of pipe 103 is slightly greater than an inner diameter c of flange recessed portion 107. Pipes 102 and 103 are connected to flange 101 by press-fitting collars 108 and 109 into flange recessed portions 106 and 107, respectively.

In the above-described press-fitting method of collar portions of pipes are fitted into flange recessed portions, however, deformation or breakage may occur in the collars, and the connection strength may be reduced. Further, when a collar is formed with an annular shape and a flange recessed portion is formed with a polygonal shape, as depicted in Fig. 13, gaps 110 are formed between the collar and the inner surface of the flange recessed portion, and the connection area therebetween decreases, and the connection strength may be reduced. Further, when a flange recessed portion is formed with a polygonal shape or a serrated shape, because it is difficult or impossible to shape it by cutting, forging or casting is required, and this may increase of the cost for manufacturing the flange. Moreover, there is a risk that condensation may collect in gaps 110, and a so-called refrigeration puncture may occur.

Accordingly, a need has arisen for pipe joint structures and methods of manufacturing such structures, which may connect a pipe and a flange securely and with certainty and which may reduce the cost of manufacture.

A pipe joint structure according to the present invention comprises at least one pipe with a collar projecting radially from the at least one pipe, and a flange having a pipe insertion hole formed through an end of the pipe and a flange recessed portion provided at a circumferential portion of the pipe insertion hole and adapted to receive the collar, wherein an inner diameter of the flange recessed portion is greater than an outer diameter of the collar, and the collar of the pipe is plastically deformable in a radial direction to bring the collar into surface contact with an inner surface of the flange recessed portion.

In this pipe joint structure, because the inner diameter of the flange recessed portion is greater than the outer diameter of the collar of the pipe, the collar may be inserted into the flange recessed portion with a predetermined amount of play (e.g., range or freedom of motion). In this condition, the collar of the pipe is plastically deformable in its radial direction, and the deformed collar may be brought into contact with the inner surface of the flange recessed portion. Therefore, while preventing an undesirable deformation or breakage of a collar as in a known, pipe joint structure in which the collar is press-fitted into a flange recessed portion, the pipe may be connected to the flange readily and securely. Further, no gap is formed between the collar and the flange recessed portion as in the known structure shown in Fig. 13, and the risk of a refrigeration puncture may be reduced, minimized, or eliminated.

In pipe joint structures according to the present invention, it is preferred that the collar is formed with an annular shape. Further, the collar may be formed as a protruded portion which is formed by protruding a portion of the pipe in its radial direction.

Further, it is preferred that a thickness of the collar in an axial direction of the pipe before the above-described plastic deformation is greater than a depth of the flange recessed portion. In such structures, when the collar is plastically deformed, the surface of the collar and the surface of the flange at the pipe insertion side may become flush with each other.

Further, it is preferred that the flange recessed portion has a circular arc extending more than a semicircle. When the flange recessed portion is of a circular arc extending more than a semicircle, and, further, the collar has an annular shape, because the collar and the inner surface of the flange recessed portion may be brought into surface contact with each other without the presence of a gap, a high strength connection therebetween may be achieved. Further, because arc-type flange recessed portion may be formed readily by machining, such as by cutting; such a structure may contribute to a reduction of the cost for manufacture.

In the present invention, a plurality of pipe insertion holes may be formed through the flange, a plurality of flange recessed portions may be formed in the flange, and a plurality of pipes are inserted into the pipe insertion holes, respectively. For example, one pipe may be provided as a heat exchange medium introduction pipe into a heat exchanger, and another pipe may be provided as a heat exchange medium discharge pipe from the heat exchanger.

Further, it is preferred that the flange recessed portion has a tapered shape, the diameter of which gradually decreases toward a pipe insertion side. In such a structure, the pipe and the flange may be connected more securely, and dislodging the plastically deformed collar from the flange recessed portion and the like may be prevented with more certainly.

In a method for manufacturing a pipe joint structure according to the present invention, an end of a pipe with a collar projecting radially may be inserted into a pipe insertion hole of a flange, and the collar of the pipe is adapted to be received into a flange recessed portion provided at a circumferential portion of the pipe insertion hole. This method comprises the steps of inserting the collar of the pipe into the flange recessed portion, and deforming the inserted collar plastically in a radial direction to bring the collar into surface contact with an inner surface of the flange recessed portion.

In such a method, the inner diameter of the flange recessed portion may be greater than the outer diameter of the collar of the pipe, and the collar may be inserted into the flange recessed portion at a condition with a predetermined amount of play. In this condition, the collar of the pipe may be plastically deformed in its radial direction, and the deformed collar may be brought into contact with the inner surface of the flange recessed portion. Therefore, while preventing an undesirable deformation or breakage of a collar as in known, pipe joint structures in which the collar is press-fitted into a flange recessed portion, the pipe may be connected to the flange readily and securely. Further, because a gap is not formed between the collar and the flange recessed portion as in a known structure depicted in Fig. 13, a risk of a refrigeration puncture may be reduced, minimized, or eliminated.

Thus, in pipe joint structures and methods of manufacturing such structure according to the present invention, an undesirable deformation or breakage of a collar of a pipe may be reduced, minimized, or eliminated, and the pipe may be connected to the flange readily and securely.

Other objects, features, and advantages of the present invention will be apparent to persons of ordinary skill in the art from the following detailed description of preferred embodiments of the present invention and the accompanying drawings.

For a more complete understanding of the present invention, the needs satisfied thereby, and the objects, features, and advantages thereof, reference now is made to the following description taken in connection with the accompanying drawings.
**Fig. 1** is a cross-sectional view of a pipe joint structure according to an embodiment of the present invention.
**Fig. 2** is a plan view of a flange in the pipe joint structure depicted in **Fig. 1.**
**Fig. 3** is a cross-sectional view of the flange depicted in **Fig. 2,** as viewed along III-III line of **Fig. 2.**
**Fig. 4** is an enlarged, cross-sectional view of the structure depicted in **Fig. 1,** showing an insertion state of a pipe into a flange recessed portion before deforming a collar plastically.
**Figs. 5A** and **5B** are cross-sectional views of the structure depicted in **Fig. 1,** showing a method of manufacturing the structure.
**Fig. 6** is a partial cross-sectional view of the structure depicted in **Fig. 1,** showing a contact condition between a collar and a flange recessed portion when the collar is plastically deformed.
**Fig. 7** is a plan view of a flange according to another embodiment of the claimed invention.
**Fig. 8** is a plan view of a flange according to a further embodiment of the claimed invention.
**Fig. 9** is a plan view of a flange according to still a further embodiment of the claimed invention.
**Figs. 10A** and **10B** are cross-sectional views of a pipe joint structure according to get another embodiment of the present invention, showing a process for manufacturing the structure.
**Fig. 11** is an enlarged, partial, cross-sectional view of a flange in the structure according to the embodiment depicted in **Figs. 10A** and **10B**.
**Fig. 12** is an exploded, cross-sectional view of a known, pipe joint structure.
**Fig. 13** is a cross-sectional view of a known, pipe joint structure, showing a contact condition between a collar and a flange recessed portion.

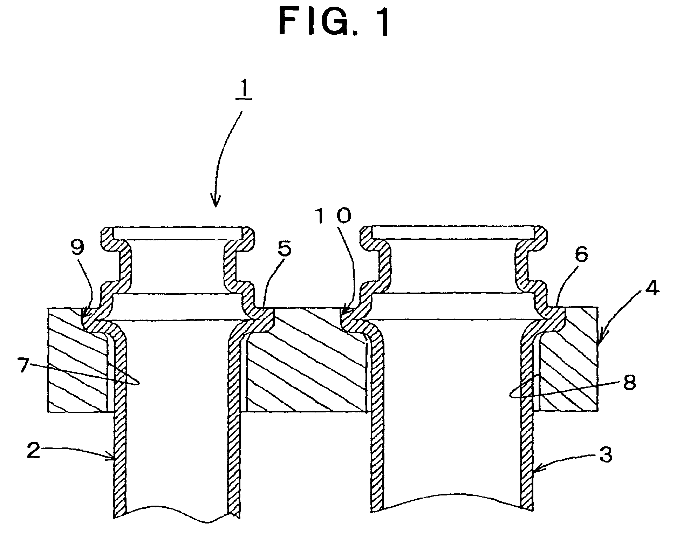

**Fig. 1** depicts a pipe joint structure 1 according to an embodiment of the present invention. In **Fig. 1,** pipe joint structure 1 comprises pipes 2 and 3 and a flange 4. In this embodiment, pipe 2 is provided as an heat exchange medium introduction pipe into a heat exchanger, and pipe 3 is provided as an heat exchange medium discharge pipe from the heat exchanger. Annular collars 5 and 6 are disposed on pipes 2 and 3, respectively. In this embodiment, collars 5 and 6 are formed as protruded portions of pipes 2 and 3, each formed by protruding a portion of pipe 2 or 3 in its radially outer direction. These protruded portions may be formed readily by pressing and the like.

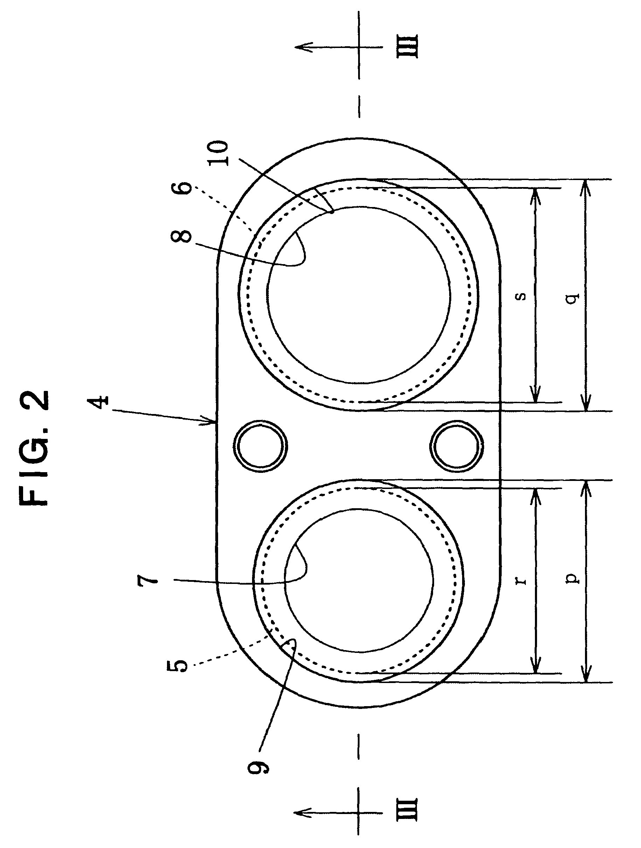

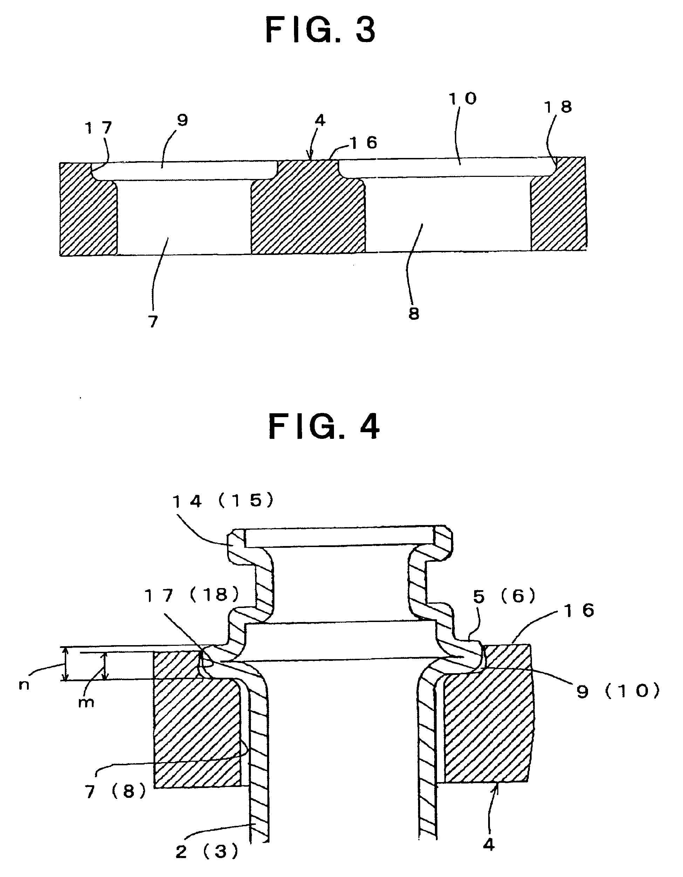

As depicted in **Figs. 2** and **3,** pipe insertion holes 7 and 8 are formed through flange 4 for receiving the ends of pipes 2 and 3. Circular flange recessed portions 9 and 10 are formed around pipe insertion holes 7 and 8 on a surface 16 of flange 4, formed at the pipe insertion side for receiving collars 5 and 6. Inner diameters p and q of flange recessed portions 9 and 10, respectively, are greater than outer diameters r and s of collars 5 and 6, respectively.

As depicted in **Fig. 4,** depth m of flange recessed portion 9 and 10 is less than thickness n of collars 5 and 6 in the axial direction of pipe 2 or 3 before collars 5 and 6 are deformed. The relationship between the above-described m and n is preferably n ≧ m, and more preferably, the ratio between m and n is within a range of 0.5 ≦ m/n ≦ 1.

A method of manufacturing pipe joint structure 1 of the above-described embodiment now is explained.

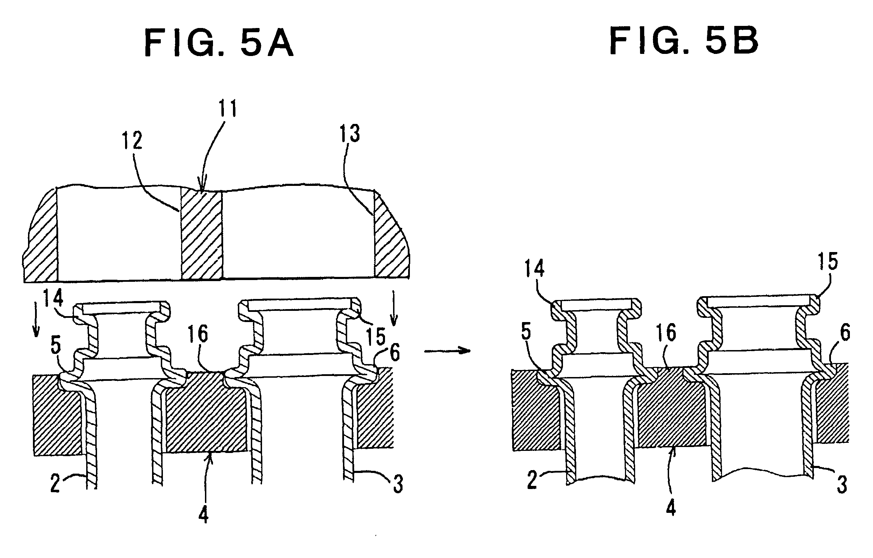

First, the end portions of pipes 2 and 3 are inserted into pipe insertion holes 7 and 8 of flange 4, and collars 5 and 6 of pipes 2 and 3 are fitted into corresponding flange recessed portions 9 and 10. Because inner diameters p and q of flange recessed portions 9 and 10 are greater than outer diameters r and s of collars 5 and 6 (i.e., p>r and q>s), collars 5 and 6 are inserted into flange recessed portions 9 and 10 with predetermined amounts of play, as depicted in **Fig. 4.** Then, as depicted in **Fig. 5A,** collars 5 and 6 may be pressed, for example, by a punch 11, from upper side, and collars 5 and 6 may be deformed plastically in their radial directions, respectively. Because punch 11 may comprise holes 12 and 13 formed therein, connection portions 14 and 15 (e.g., connection portions to be connected to an expansion valve) of respective pipes 2 and 3 are not deformed, and only collars 5 and 6 are plastically deformed in their radial directions by the outer circumferential portions of the holes 12 and 13. In this embodiment, as depicted in **Fig. 5B,** collars 5 and 6 are plastically deformed to be flush with surface 16 of flange 4 on at the pipe insertion side.

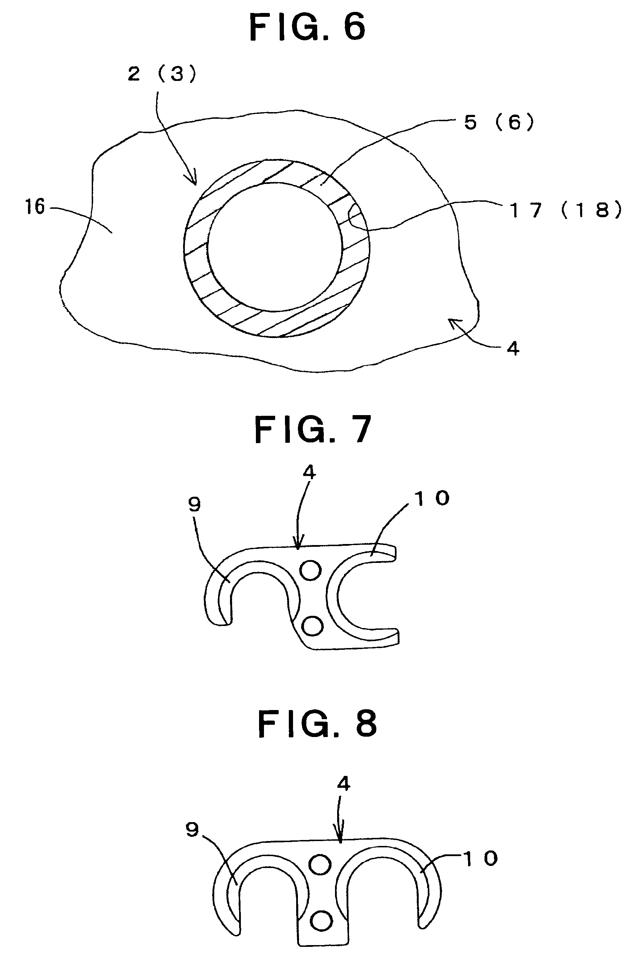

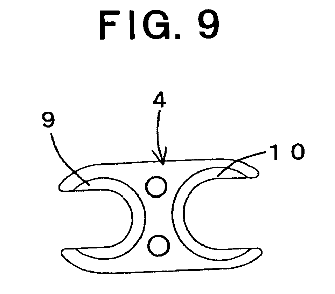

Collars 5 and 6 are deformed plastically to be brought into contact with inner surfaces 17 and 18 of flange recessed portions 9 and 10 without generating a gap over the entire circumference. Although each of flange recessed portions 9 and 10 may be formed with a circular shape, and the entire circumference of each of collars 5 and 6 is brought into surface contact with each of inner surfaces 17 and 18 in this embodiment, if greater than half (i.e., > 50%) of the circumference of annular collar 5 or 6 is brought into surface contact with inner surfaces 17 or 18, a connection of sufficient strength between a pipe and a flange may be achieved. Therefore, flange recessed portions 9 and 10 may be formed with a circular arc, extending more than a semicircle, as depicted in **Figs. 7** to **9,** respectively. Further, because these circular or circular arc, flange recessed portions may be processed readily by machining, such as cutting, the cost for manufacturing a flange may be significantly reduced as compared with a known manufacturing methods in which forging or casting has been required.

Further, in this embodiment, because inner diameters p and q of flange recessed portions 9 and 10 are greater than outer diameters r and s of collars 5 and 6, respectively, collars 5 and 6 are inserted into flange recessed portions 9 and 10 with predetermined amounts of play. When collars 5 and 6 are plastically deformed in the radial directions of pipes 2 and 3, plastically deformed collars 5 and 6 are brought into surface contact with inner surfaces 17 and 18 of flange recessed portions 9 and 10, respectively. Therefore, while preventing an undesirable deformation or breakage of collars as in a known structures in which collars are press-fitted into flange recessed portions, pipes 2 and 3 may be connected to flange 4 readily and securely. Further, because there may be no gap between collars 5 and 6 and flange recessed portions 9 and 10, a refrigeration puncture may be prevented.

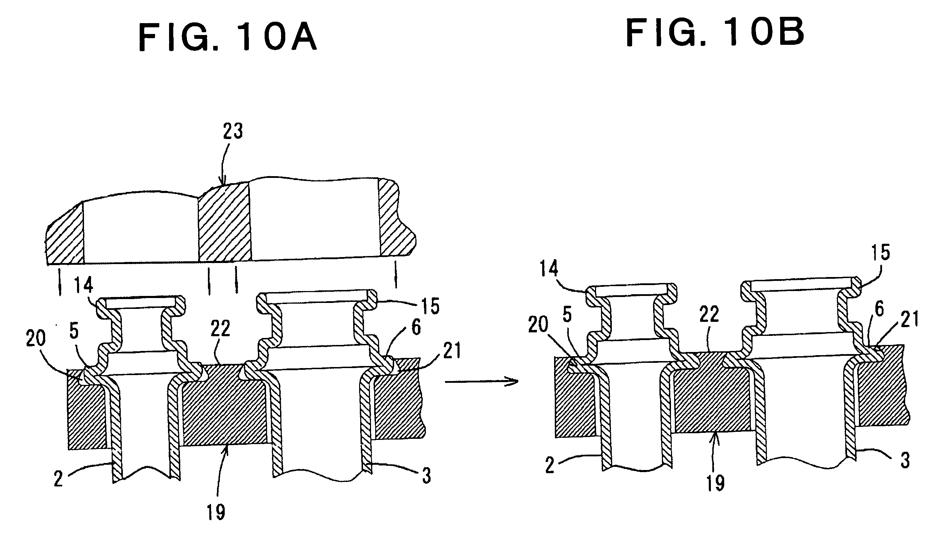

**Figs. 10A** and **10B** depict a pipe joint structure and a method of manufacturing such structures, according to another embodiment of the present invention. Each of flange recessed portions 20 and 21 of flange 19 are formed with a tapered shape, the diameter of which gradually decreases toward a surface 22 of flange 19 on the pipe insertion side, as depicted in **Fig. 11.** In addition, in this embodiment, as depicted in **Fig. 10A**, collars 5 and 6 may be pressed, for example, by a punch 23, from upper side, and, as depicted in **Fig. 10B,** collars 5 and 6 may be plastically deformed into flange recessed portions 20 and 21, and collars 5 and 6 and flange 19 may be connected securely to each other. In this embodiment, because each of flange recessed portions 20 and 21 is formed with a tapered shape, the diameter of which gradually decreases toward surface 22 on the pipe insertion side, dislodging collars 5 and 6 from flange recessed portions 20 may be prevented with more certainty. Therefore, the connection between the pipes and the flange may be strengthened.

The pipe joint structures and the methods of manufacturing such structures, according to the present invention, may be broadly applied to many joint structures comprising a pipe and a flange, and in particular, they are suitable for connections between an heat exchange medium introduction pipes or on heat exchange medium discharge pipe, or both, and heat exchanger core used in a vehicle.

## Claims

1. A pipe joint structure comprising at least one pipe with a collar projecting radially from each of said at least one pipe, and a flange having a pipe insertion hole formed through an end of said pipe and a flange recessed portion provided at a circumferential portion of said pipe insertion hole and adapted to receive said collar, wherein an inner diameter of said flange recessed portion is greater than an outer diameter of said collar, and said collar of said pipe is plastically deformable in a radial direction to bring said collar into surface contact with an inner surface of said flange recessed portion.

2. The pipe joint structure of claim 1. wherein said collar has an annular shape.

3. The pipe joint structure of claim 1 or 2, wherein said collar has a protruded portion which is formed by protruding a part of said pipe in its radial direction.

4. The pipe joint structure of any preceding claim, wherein a thickness of said collar in an axial direction of said pipe before said plastic deformation is greater than a depth of said flange recessed portion.

5. The pipe joint structure of any preceding claim, wherein said flange recessed portion is a circular arc extending more than a semicircle.

6. The pipe joint structure of any preceding claim, wherein said flange comprises a plurality of pipe insertion holes formed therethrough and a plurality of flange recessed portions formed therein, and a plurality of pipes are received into said pipe insertion holes, respectively.

7. The pipe joint structure of any preceding claim, wherein said flange recessed portion is formed as a tapered shape the diameter of which gradually decreases toward a pipe insertion side.

8. The pipe joint structure of any preceding claim, wherein said flange is for connection of an heat exchange medium introduction pipe or an heat exchange medium discharge pipe, or both, to a heat exchanger core.

9. A method for manufacturing a pipe joint structure, wherein an end of a pipe with a collar projecting radially therefrom is inserted into a pipe insertion hole of a flange, and said collar of said pipe is fitted into a flange recessed portion provided at a circumferential portion of said pipe insertion hole, comprising the steps of:
inserting said collar of said pipe into said flange recessed portion; and
deforming said inserted collar plastically in a radial direction to bring said collar into surface contact with an inner surface of said flange recessed portion.
